# EUROPEAN PATENT SPECIFICATION

(11) **EP 1 153 217 B1**
(45) Date of publication and mention of the grant of the patent: **18.08.2004**
(21) Application number: 99972718.3
(22) Date of filing: 19.11.1999
(51) Int. Cl.: F03B 13/14, F03B 13/08

(54) **ENERGY CONVERSION UNIT TO CONVERT SEA WAVES ENERGY INTO ELECTRIC ENERGY**
ENERGIEUMWANDLUNGSEINHEIT ZUR WANDLUNG DER ENERGIE VON SEEWELLEN IN ELEKTRISCHE ENERGIE
UNITE DE CONVERSION D'ENERGIE POUR CONVERTIR L'ENERGIE DE VAGUES MARINES EN ENERGIE ELECTRIQUE

(30) Priority: 25.11.1998 PT 10222798
(43) Date of publication of application: 14.11.2001
(73) Proprietor: Enerwave, Produçao de Energia, Lda., 2780 Paço d'Arcos (PT)
(72) Inventor: Marques Craveiro Lopes Preto, Virgilio, 1600-773 Lisbon (PT)
(74) Representative: Pereira da Cruz, Joao
(86) International application number: PCT/PT1999/000017
(87) International publication number: WO 2000/031412

(56) References cited:
- FR-A- 1 174 108
- FR-A- 2 407 366
- US-A- 4 078 871

## Description

### Background of the invention

Apparatuses to transform kinetic and potential energy into electrical energy are already known. Among them, reference is made to US 4,078,871 and FR 2,407,366.

Patent US 4,078,871 concerns an aspirating device for a hydro-electrical group, namely a group with a turbine having a small chute fitted between an upstream area and a downstream area of a water course, such device comprising an inlet that is in communication with the upstream area and which is connected by means of a passage arranged at the entrance of the turbine, the outlet of which is normally underwater in the downstream area, characterised in that the connecting passage at the entrance of the turbine consists in a siphon which transposing threshold is located under a level of normal filling of the upstream area, the inlet of the connecting passage being totally provided under the level of the transposing threshold.

The FR 2407366 refers to a fixed structure which encloses a vertically spaced plurality of superimposed channels that are open at one end of the sea to receive deep sea waves approaching a shore line. Each of the channels has an entrance ramp that slopes upwardly shorewardly to induce breaking of a wave at and over an apex of the ramp that merges into a shorewardly downwardly sloping convergent conduit having fluid communication with a pressure chamber of the structure through a one-way valve controlled aperture at which the wave energy is concentrated. A portion of each ramp is overlain by a roof which may comprise the underside of a superimposed ramp of another channel. Water is directed from the pressure chamber of the structure into energy recovery devices utilizing the kinetic hydrostatic and pneumatic energy contained in the pressure chamber, which acts as an accumulator.

The invention relates to a unit for production of electric power using the energy of sea waves. This unit can work coupled with the already existing maritime infrastructures, such as moles, pontoon bridges, ports, docks, etc.

The innovation of the system results from the improvement of the energy exploring the different conditions of the sea between the two sides of the infrastructure (mole, port, etc.): the open sea on one side with all its potential and kinetic available energy, on the other side a stabilised surface and with potential and kinetic energy practically dissipated.

The functioning of the process is based on the working principle of a siphon, that is, if there exists a difference of height between two surfaces and if conditions of water circulation are created, the draining is made from one side of the infrastructure to the other till the levels of the free levels of the surface between the two sides are balanced.

In this unit the difference of heights between the free surfaces is secured by two tanks conceived to achieve the finest performance of those functions:
- Tank of reception (1) which is located on the seaside and therefore it is fed by the sea waves utilising and converting the potential and kinetic energies into potential energy of position.
- Tank of the turbine (3) which is located on the other side of the mole, that is, inside the dock to receive and convert the energy accumulated inside the reception tank into electric power. So, if the average undulation (wave motion) will reach the 3 meters, the theoretical difference between the free surfaces of the tanks will be at least 3 meters, without considering the kinetic energy of the waves.

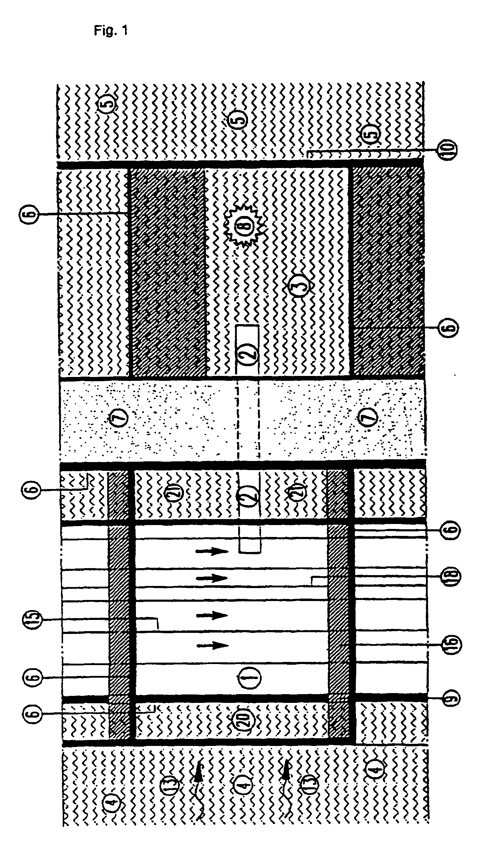

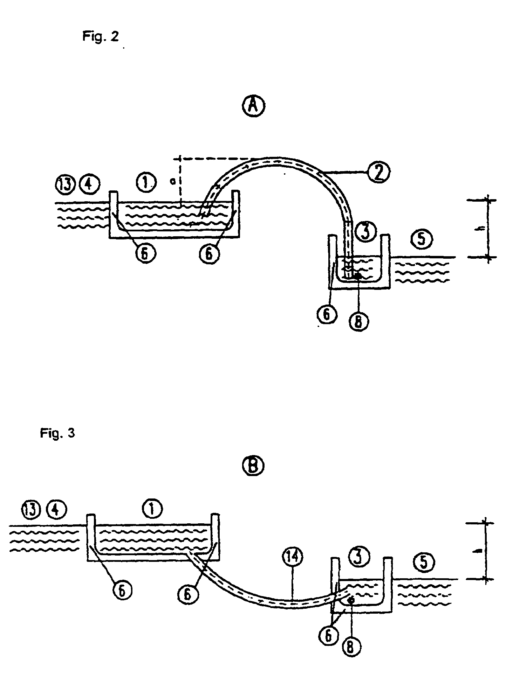

Therefore, the unit (Drawing 1) is mainly composed by the following operational means (Drawing 2): Tank of reception (1), Siphon (2) and Tank of the Turbine (3).

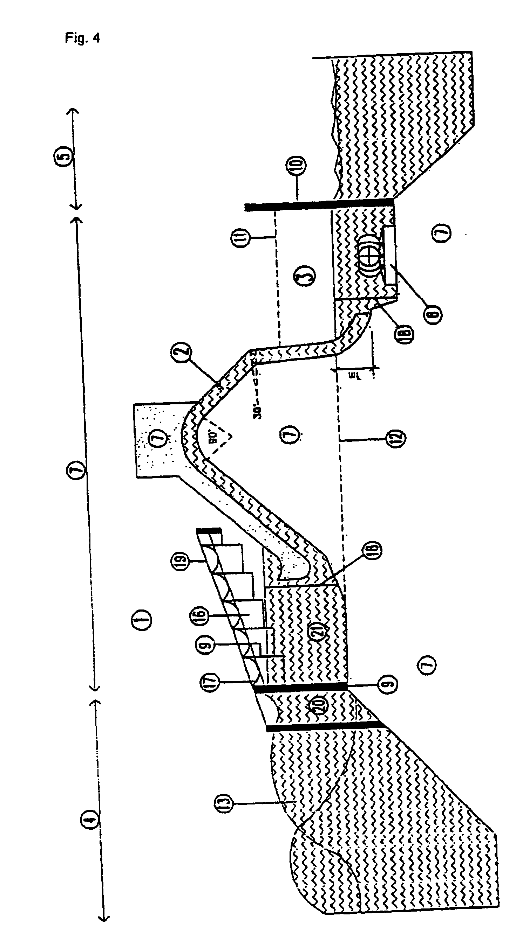

### TANK OF RECEPTION (1), (Drawing 3, 4 and 5)

This tank will be composed by a mixed structure of concrete (6) and rigid metallic structure, in order to support the impact and the strength of the sea waves since the front side of this tank will be in direct contact with the sea (4) (13).

The reception tank (1) is composed by several elements which in the whole allow the water of the sea waves to enter the tank and do not leave it. So, we have a first tank of concrete (20), which we call enchasing tank (2), whose front side will be slightly inclined, in order to help lifting the wave up. This first tank (20) will be located alongside the mole, upright the forward movement of the wave. Part of the tank is covered by a slab of concrete (19) under which it is installed a feed system (9) of the reception tank (1) which will be duly protected from the impact of the waves and of the remains as well by means of a system of protections and gridirons.

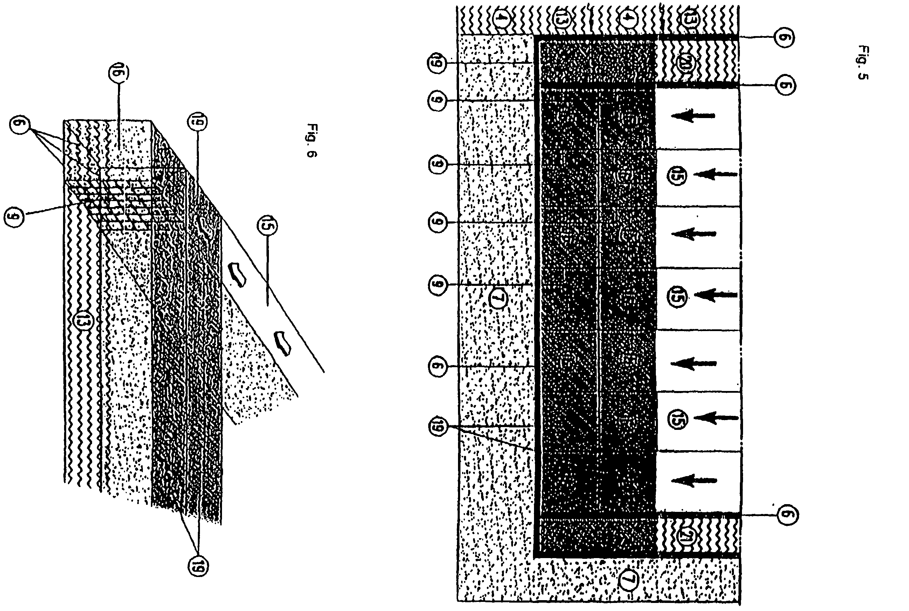

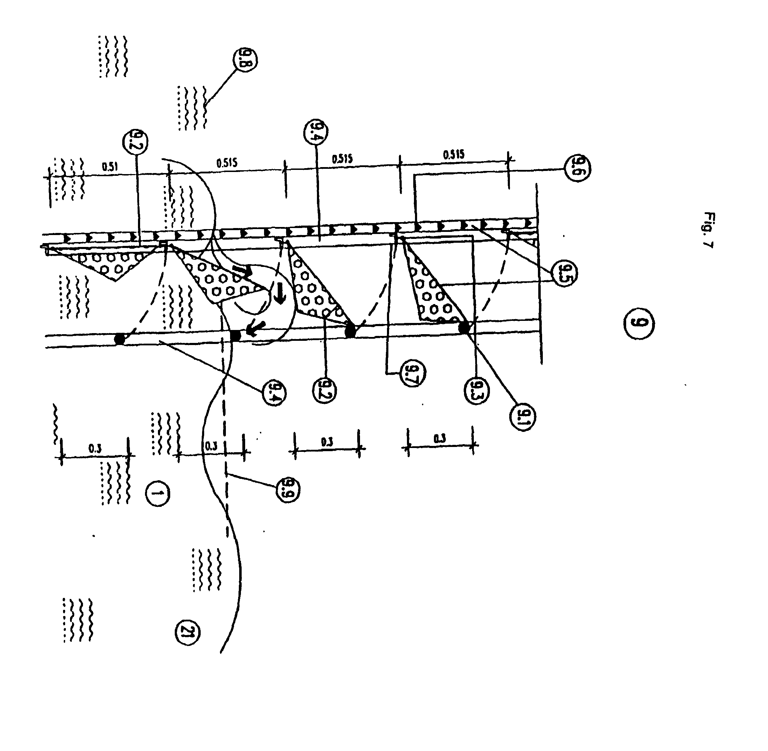

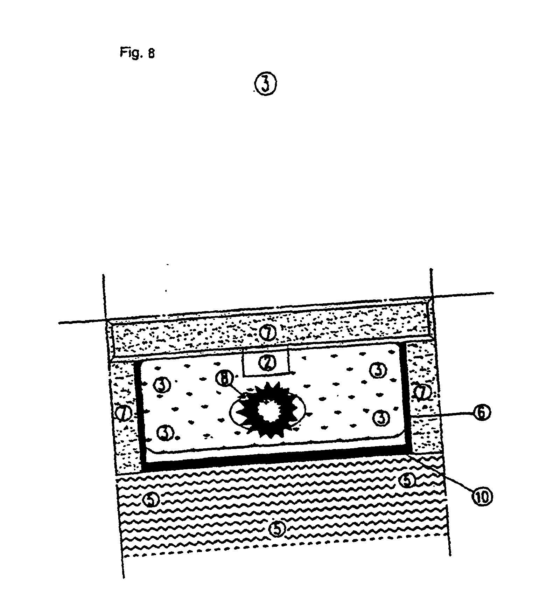

The feed system (9) of the tank of reception (1) is composed by a metallic structure shutter type (9.2 to 9.7), whose opening and closing functions are automatically regulated by the water level inside the tank (9.9), which is direct function of the height of the waves (13). The shutters (9.2) are made of clinched stainless steel sheet with an inside coupled floating appliance (9.6), which shut them when the water level inside the tank goes higher (9.9.). The shutters work independently from one another with an axis of rotation (9.3) under the plate to be fixed to the structure (9.4), allowing the clinch till the metallic profile of pause (9.7), according to drawing 5. The estimate and the size of the shutter (9.2) will be based on the characteristics of the sea where the unit will be located. The shutters (9.2) can have a complementary set of floodgates (9.5) whose going up and down will be controlled by the opening and closing of the shutters (9.2) and, therefore, by the level of the water inside the tank (9.9).

This feed system (9) is just a functional example, which can be replaced by another type of system better adjusted to the local conditions.

The second tank will be covered (15 and 19) and will store the water which will feed the siphon and for that reason its size, function of the pipe section (2) (14) and its peculiarities (which define the stream), and the characteristics of the waves where the unit will be built (average frequency and average height of the waves).

The covering of this tank will be inclined (17), composed by innumerable gutters (15) spread in parallel along the mole, that is in a perpendicular position to the wave movement and they end in a reception box (16). These gutters (15) which gather the water of the sea waves work independently among them and in several levels having a steady inclination, in order to guide the water to the reception (16). The reception box (16) will be covered by a slab made of concrete (19). In one of the walls of the box, it is located the feed system (9) of the reception tank which will be of the same type of the one above described, that is with shutters (9.2) and it is duly protected.

This energy improvement unit of sea waves can be composed by innumerable parallel tanks (1) whose pipe systems (2) (14) will feed the same turbine (8) or several turbines (8).

The first tank or enchasing tank (20), the gutters (15) with their reception boxes (16) and the feed system (9) will be constructed in a size to allow a permanent feeding action of the tank of reception (1), being the functioning of this system in the whole of enchasing type and dosage of stream, since the waves are cyclical and with certain regularity they change their frequence according to the location of the unit, the tides, the height of the waves and the period of the year.

### SIPHON OR CONNECTING PIPE SYSTEM (2)

This argon will be made of concrete or in metallic pipe, according to the needs of load and stream. The drawing of pipe system will be made in a way to reduce the losses of load, the execution costs, self-cleaning conditions and future maintenance.

To protect the entry of the siphon (2) or connecting pipe system (14) two nets will be installed (18): the first one with mean mesh and the second with tight mesh, in order to prevent seaweed, remains, fishes, etc. to enter the siphon, avoiding the stoppage or the bad functioning of the siphon or piping.

The valves, waste cleaning devices, cupping-9 losses, etc. will also be made taking into consideration the purposes and needs for which they are needed in each unit to be built.

### TANK OF THE TURBINE (3)

The tank of the turbine (3) will be built in a mixed structure of concrete and metal (6) (10) and it will be adapted to the existing mole (7) and it will be located inside the shelter port (5). In this tank (3) where the siphon ends (2) it is installed the turbine (8) for hydroelectric utilisation. The turbine (8) moves by the water flow coming from the siphon (2) whose energy will be proportional to the difference of heights between tanks.

This tank (3) will have the suitable size for the functioning of both the siphon (2) and the turbine (8), in order not to cause any turbulence, refluxes, which will originate load losses or output failures. The side walls will be made of concrete (6) for better adapting to the existing mole (7) being the lock of the tank on the side of the dock (5) in metallic structure (10) panelled in gridiron with protection net to avoid seaweed, remains, fishes, etc. to enter the tank. The tank will be covered by a concrete and metallic structure and there will be access to the turbine and working equipment through a trapdoor, stairs and platforms. The engine room (technical area) can be located on the tank of the turbine. In case the planned unit works with several turbines, the tanks will be installed in parallel alongside the mole.

The turbine (8) is of reception type since it is crossed over by the draining under pressure which comes out of the siphon and it is located at a fixed line under the minimum level of the high tide. The turbine (8) will have a distributor whose function is converting part of the energy of pressure into kinetic energy and guiding the entering of water to the wheel, and the diffuser composed by a conductor of section developing in a growing way, in order to recover partially the kinetic energy when the wheel comes out. The turbine (8) will have the size taking into consideration the stream and the useful fall, which will be quite variable as they will depend from the height of the waves directly, height of the free surface of the reception tank and from the tide (Drawing 3).

### NEW UNITS TO BE CONSTRUCTED WITHOUT USING THE EXISTING INFRASTRUCTURES

The new units to be built may not use the siphon (2), whose output reduces the use of available energy, replacing it by a pipe (14) of communication between the two tanks (1) and (3). In these cases the energy obtained is directly the sum of the difference of heights between the free surfaces of the two tanks, less the losses of load due to the pipe material, pipe outline and its singularities, density and temperature of the sea water and others but always superior to the system with siphon. In these cases the tank of reception (1) and the one of the turbine (8) will be in everything similar to those of the above described unit, as the functioning of the unit in general as well. The outline of the pipe (1 4) must always be very good in order to lose as little less as possible.

### LEGEND

(1) Tank of reception
(2) Siphon
(3) Tank of the turbine
(4) Sea
(5) Sea inside the dock
(6) walls of the tank in concrete
(7) Existing mole
(8) Turbine
(9) Feed system of the reception tank
   (9.1) Pipe in sold iron
   (9.2) Stainless steel sheet with floating appliance
   (9.3) Axis of rotation
   (9.4) Angle iron
   (9.5) Gate in stainless steel sheet
   (9.6) Rail in square mesh
   (9.7) Support in stainless steel angle iron
   (9.8) Stream proceeding from sea wave
   (9.9) Level of the reception tank
(10) Metallic structure wall with bar
(11) Maximum level during high tide
(12) Minimum level during low tide
(13) Waves
(14) Feed pipe of the turbine
(15) Gutters of concrete (or metal)
(16) Reception box
(17) Covering of reception tank
(18) Rail of protection
(19) Concrete covering slab of the reception box
(20) Enchasing tank
(21) Second tank

(A) Functioning plan of the pontoons to be built
(B) Functioning plan of the existing pontoons

- A: < (10.33m - Cargo losses)
- h: Height of the waves

## Claims

1. Energy conversion unit to convert sea waves energy into electric energy, with utilization of existing infra-structures (7) having on one side the open sea (4) exposed to the impact and intensity of the sea waves (13) and on the other side (5) calm and stabilised surface, the transformation of the kinetic energy and potential energy of waves into energy of position being based on the difference of heights of the free surfaces of the two tanks (1) and (3) set in a mole (7), one located on the seaside (4), tank of reception (1), and the other one (3) under the sheltered area (5), inside a port on the land side where a hydraulic turbine (8) is installed, the water passing from one tank to another through a tubing system (2) with draining pressure, which feeds the hydraulic turbine (8) to produces electric energy,
**characterised in that**:
the reception tank (1) is composed by a first tank (20) and a second tank (21) and presents an integrated system of gutters (15) and respective reception boxes (16) and a system to capture and retain the waves (9) of the sea which allows wave energy to be transformed into meters of water column, such a system being installed in a covered area (19) of the first tank (20) and reception boxes (16) which allows the inflow of the water from the waves but not its outflow, the water inside the tank being stored in height (21);
the second tank (21) showing a cover (17) formed by the said integrated system of gutters (15) the development of which is perpendicular to the forwarding sense of the sea waves, such gutters ending in the said reception boxes (16) covered by a slab (19) the system to capture and retain the water (9) from the sea waves being fitted in one of the walls thereof.

2. An energy conversion unit according to claim 1, **characterised in that** the first tank (20) presents a slightly inclined front side to help lifting the wave up and which will allow the reception tank (1) to be filled up to a first level.

3. An energy conversion unit as claimed in 1 and 2, **characterised in that** the system to capture and retain the water (9) from sea waves is composed by a metallic structure of the shutter type (9.2) the opening and closing of which is automatically regulated by floating devices fitted onto the rear portion of the shutter plates (9.2) independent from each other and complementarily can have a set of floodgates (9.5) whose going up and down functions will be controlled by the opening and closing of the shutters (9.2).

## Patentansprüche

1. Energieumwandlungsanlage zer Umwandlungv von MeereswellenEnergie in elektrische Energie unter Benutzung von bereits bestehende Infrastrukturen (7), deren eine dem offene Meer (4)zugewandten Seite dem Anprall und der Wucht der Meereswellen (13) ausgesetzt ist,und deren anderen Seite (5) eine ruhige und lagefeste Oberfläche aufweist, wobei die Umwandlung der kinetischen und potentielle Energie der Wellen in Ruheenergie auf der Höhendifferenz zwischen den freien Oberfläche der an einer Mole(7) liegenden zwei Becken (1)und (3)beruht,und bei der ein Becken als Auffanngsbecken (1)auf der Seeseite(4)dient und das andere (3) sich im geschützten Bereich(5) innerhalb eines Hafens auf der Landseitebefindet, in dem eine hydraulische Turbine (8) aufgestellt ist, wobei das Wasser von einem Becken zum anderen Becken durch ein Rohrleitungssystem (2) unter Saugdruck zu der hydraulischen Turbine(8) für die Gewinnung von elektrischer Energie fliesst,
**dadurch gekennzeichnet, dass**
das AuffangsBecken (1) aus einem resten Becken(20) und einem zweiten Becken (21) besteht und ein integriertes System von Rinnen(15) und entsprechenden Auffangsbehältern (16) und ein System zum Auffangen und Stauen der Meereswellen (9)aufweist, welches die Umwandlung der Wellenenergie in Metern Wassersäule gewährleistet,wobei ein solches System wird in einem bedeckten Bereich (19) des ersten Beckens (20) und der Auffangbehälter (16) eingebaut ist, was den Zufluss des Wellenwassers, jedoch nicht dessen Abfluss, sicherstellt, und das sich im Becken befindende Wasser in der Höhe (21) gespeichert wird,
das zweite Becken (21)eine Abdeckung(17) besitzt, die durch das erwähnte integrierte System von Rinnen (15) gebildet wird, die senkrecht zur Fließrichtung der Meereswellen verfalfen, wobei diese Rinnen in der erwähnten durch eine Platte(19)abgedeckten Auffangsbehältern (16) enden,und das Sistem zum Auffangen und Stauen des Wassers (9) der Meereswellen in einer Wandungen eingepasst ist.

2. Eine Anlage zur Energieumwandlung gemä Anspruch 1, **dadurch gekennzeichnet, dass** die leichte Neigung der Voprderseite des resten Beckens(20)das Aufsteigen einer Meereswelle erleichtern soll, wodurch das Füllen des Auffangsbeckens (1) auf einen ersten Wasserpegel gewährleistet wird.

3. Eine Anlage zur Energieumwandlung gemä den Ansprüchen 1 und 2, dadurch gekkenzeichnet, dass das System zum Auffangen und Stauen des Wassers (9)von Meereswellen aus einer Metallkonstruktion in Form von Schiebeblenden(9.2)besteht, die durch an der Hinterseite der Schiebeblendenplatten (9.2) eingbaute Schwimmer automatisch geöffnet und geschlossen wird, wobei die Schiebeblenden unabhängig voneinander arbeiten und zusätzlich eine Reihe von Fluttoren (Schleusen)(9.5) eingebaut werden kann, deren Aufwärts- und Abwärtsbewegungen durch das Öffnen und Schließen der Schiebeblenden (9.2) gesteuert werden.

## Revendications

1. Unité de conversion d'énergie pour transformer l'énergie des vagues de la mer en énergie électrique, en utilisant les infrastructures existantes (7), ayant d'un côté la mer ouverte (4) exposée à l'impact et à l'intensité des vagues de la mer (13) et de l'autre côté (5) une surface calme et stabilisée, la transformation de l'énergie cinétique et de l'énergie potentielle des vagues en énergie de position se basant sur la différence de hauteur des surfaces libres des deux réservoirs (1) et (3) implantés dans un môle (7), l'un se localisant du côté de la mer (4), le réservoir de réception (1), et l'autre (3) en dessous de la zone abritée (5), à l'intérieur d'un port du côté de la terre où est installée une turbine hydraulique (8), l'eau passant d'un réservoir à l'autre à travers un système de tubage (2) avec drainage sous pression, qui alimente la turbine hydraulique (8) afin de produire l'énergie électrique, **caractérisée en ce que**:
le réservoir de réception (1) se compose d'un premier réservoir (20) et d'un deuxième réservoir (21) et il présente un système intégré de gouttières (15) et des boîtes de réception respectives (16) et un système pour capturer et retenir les vagues (9) de la mer, qui permet de transformer l'énergie des vagues en mètres de colonne d'eau, ledit système étant installé dans une zone couverte (19) du premier réservoir (20) et des boîtes de réception (16), permettant l'entrée de l'eau des vagues mais non pas sa sortie, l'eau à l'intérieur du réservoir étant conservée en hauteur (21); le deuxième réservoir (21) présente une couverture (17) formée dudit système intégré de gouttières (15), dont le développement est perpendiculaire au sens vers l'avant des vagues de la mer, lesdites gouttières se terminant dans les boîtes de réception (16) couvertes par une dalle (19), le système pour capturer et retenir l'eau (9) des vagues de la mer étant installé dans l'une des leurs parois.

2. Unité de conversion d'énergie selon la 1^{ère} revendication, **caractérisée en ce que** le premier réservoir (20) présente une face avant légèrement inclinée pour aider à soulever la vague, ce qui permettra que le réservoir de réception (1) soit rempli jusqu'à un premier niveau.

3. Unité de conversion d'énergie selon les 1^{ère} et 2^{ème} revendications, **caractérisée en ce que** le système pour capturer et retenir l'eau (9) des vagues de la mer se compose d'une structure métallique du genre volets (9.2), dont l'ouverture et la fermeture sont automatiquement régulées par des dispositifs flottants installés sur la partie arrière des lames des volets (9.2) indépendants les uns des autres, et il peut comprendre complémentairement un jeu d'écluses (9.5) dont les fonctions de monter et descendre seront contrôlées par l'ouverture et la fermeture des volets (9.2).
